# EUROPEAN PATENT SPECIFICATION

(11) **EP 4 024 670 B1**
(45) Date of publication and mention of the grant of the patent: **07.06.2023**
(21) Application number: 21210138.0
(22) Date of filing: 24.11.2021
(51) Int. Cl.: H02K 1/27, H02K 1/278, H02K 15/16

(54) **A ROTOR COMPRISING MAGNETS USED AS BALANCE WEIGHT AND A HERMETIC COMPRESSOR**
ROTOR MIT MAGNETEN, DIE ALS AUSGLEICHSGEWICHT VERWENDET WERDEN, UND HERMETISCHER VERDICHTER
ROTOR COMPRENANT DES AIMANTS UTILISÉ COMME CONTREPOIDS ET COMPRESSEUR HERMÉTIQUE

(30) Priority: 30.12.2020 TR 202022370
(43) Date of publication of application: 06.07.2022
(73) Proprietor: Arçelik Anonim Sirketi, 34445 Istanbul (TR)
(72) Inventor: BEZIRGAN, Gorkem, 34445 ISTANBUL (TR); TASDELEN, Ergin, 34445 ISTANBUL (TR); YESILAYDIN, Ismail, 34445 ISTANBUL (TR); KORKMAZ, Cansin, 34445 ISTANBUL (TR)

(56) References cited:
- EP-A1- 1 983 636
- JP-A- 2004 336 831
- JP-A- 2017 209 014
- US-A1- 2015 333 582

## Description

The present invention relates to a rotor wherein the magnets are placed into the rotor package so as to form counterweight, and to a hermetic compressor comprising said rotor.

Hermetic compressors are used in various applications such as cooling devices and air conditioners. In compressors, the refrigerant is circulated in the refrigeration cycle and enters the compressor. The refrigerant is pumped by means of the motor and the piston. The variable capacity hermetic refrigeration compressor generally comprises a BLDC electric motor which includes a magnet-rotor and a stator. The rotors have two types of magnet placement which are surface permanent magnet (SPM) and internal permanent magnet (IPM). In the type of placement called surface permanent magnet, the magnets are placed to the rotor package so as to surround the rotor package from outside. In the structure called internal permanent magnet, the magnets are placed into housings formed on the rotor package.

The stator of the BLDC electric motor is manufactured by placing coils composed of conductive wires into the slots in the stator package composed of magnetic sheets. The rotor placed to the center of the stator of the motor without any contact comprises a rotor package composed of magnetic sheets. In the hermetic compressor, a metal compressor body is placed onto the stator, and the compressor body supports basic mechanical components such as cylinder, piston, crank and connecting rod, crankpin, etc. The rotor is mounted snap-fittingly onto the crank.

The piston moves back and forth and forces the refrigerant to move towards the cylinder head. After passing the cylinder head, the refrigerant joins the refrigerant cycle again. During the operation of the compressor, the rotational movement received from the motor is transferred to the piston with the crank, connection rod and crankpin mechanism. The pressure of the refrigerant fluid increases after being compressed by the reciprocating movement of the piston. High-pressure gas is delivered to the cylinder head exhaust chamber by passing through the exhaust port with the opening of the exhaust leaf on the valve table. The gas in the exhaust chamber is delivered to the exhaust silencer and sent to the system by means of the vibration pipe.

During the compression cycle in the hermetic compressor, an imbalance occurs due to the difference between the center of mass and the rotational axis of the rotor. This imbalance causes loss of efficiency and power, adversely affecting the performance of the hermetic compressor. Moreover, vibrations generated as a result of the imbalance caused by undesired inertia forces and moments cause wear in piston and crank bearings, and the crank, connecting rod and piston mechanism operating at high speeds increases the noise due to the imbalance.

In the state of the art International Patent Application No. WO2020057822A1, a rotor featuring balance weights is disclosed, which is composed of a rotor package, an even number of permanent magnets placed into the rotor package, rotor caps placed on the lower and upper surfaces of the rotor package and fixed with connection members, and a gap left between the permanent magnets and the rotor caps. The magnets in said rotor are placed into the housings in the rotor package. Therefore, the rotor comprises magnets of the type called internal permanent magnets (IPM).

In the state of the art Chinese Utility Model Document No. CN206313596, it is disclosed that the need for counterweight required for balancing is met by attaching a stepped additional component onto the rotor. EP1983636A1 discloses a surface permanent magnet type rotor.

The aim of the present invention is the realization of a rotor having permanent magnets which are placed so as to form a balance weight, and of a hermetic compressor comprising said rotor.

Another aim of the present invention is the realization of a hermetic compressor wherein masses are balanced without requiring any additional weight as balance weight in rotors having magnets placed onto the outer peripheral surface of the rotor package.

The rotor of the present invention comprises magnetic sheets. Permanent magnets are placed around the rotor package formed by stacking and joining said magnetic sheets.

The rotor of the present invention has a rotational axis formed along a vertical axis passing through a central point where the crankshaft is placed. Some of the permanent magnets placed onto the rotor package are placed with a difference in level so as to be positioned at a higher level than the uppermost magnetic sheet of the rotor package.

Some of the remaining permanent magnets are placed onto the rotor package so as to be positioned at a lower level than the level of the lowermost magnetic sheet of the magnetic sheets forming the rotor package.

In an embodiment of the present invention, the permanent magnets placed so as to be positioned at a higher level than the upper magnetic sheet and the permanent magnets placed so as to be positioned at a lower level than the lower magnetic sheet are symmetrical with respect to the plane of rotation.

For example, in an embodiment of the present invention, the number of permanent magnets which remain on the right of the place of rotation and which are placed so as to be at a higher level than the upper magnetic sheet is equal to the permanent magnets which remain on the left of the place of rotation and which are placed so as to be at a higher level than the upper magnetic sheet. Similarly, the number of permanent magnets which remain on the right of the place of rotation and which are placed so as to be at a lower level than the lower magnetic sheet is equal to the permanent magnets which remain on the left of the place of rotation and which are placed so as to be at a lower level than the lower magnetic sheet. Thus, since the centrifugal force of the magnets is equal while forming the balance weight with the placement of magnets onto the rotor, the rotor does not sway during the rotation.

In a preferred embodiment of the present invention, the permanent magnets have the same weight.

In an embodiment of the present invention, while an even number of, for example four, permanent magnets are positioned on the rotor package so as to be 3mm higher than the upper magnetic sheet, an even number of, for example four, permanent magnets are placed onto the rotor package so as to be 3mm lower than the lower magnetic sheet.

In an embodiment of the present invention, six permanent magnets are placed on the rotor package so as to be 2mm higher than the upper magnetic sheet, six permanent magnets are placed onto the rotor package so as to be 2mm lower than the lower magnetic sheet.

By means of the present invention, a rotor with automatic balance weight feature and a hermetic compressor wherein vibrations and noise are reduced without using an additional rotor balance weight are realized.

The drawings are not meant to delimit the scope of protection as identified in the claims nor should it be referred to alone in an effort to interpret the scope identified in the claims without recourse to the technical disclosure in the description of the present invention.

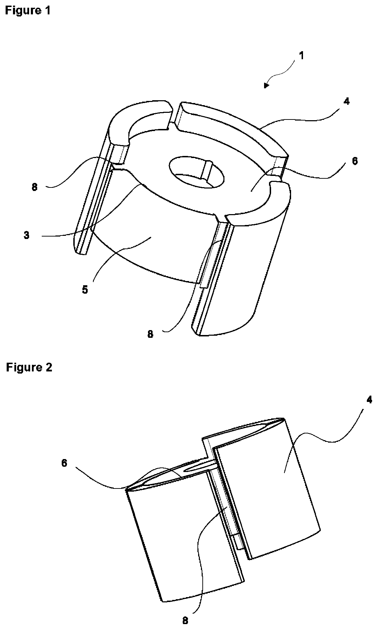

**Figure 1** - is the perspective view of the rotor of the present invention in an embodiment featuring four magnets.
**Figure 2** - is the view of the rotor in Figure 1 from a different angle.

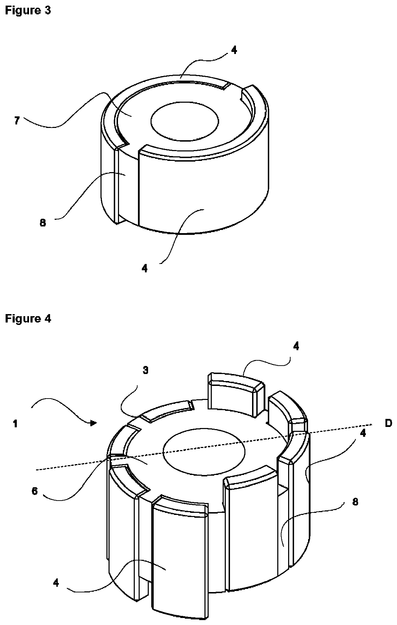

**Figure 3** - is the view of the rotor of the present invention showing the lower magnetic sheet in an embodiment featuring two magnets.
**Figure 4** - is the perspective view of the rotor of the present invention in an embodiment featuring eight magnets, showing the placement thereof and the place of rotation.

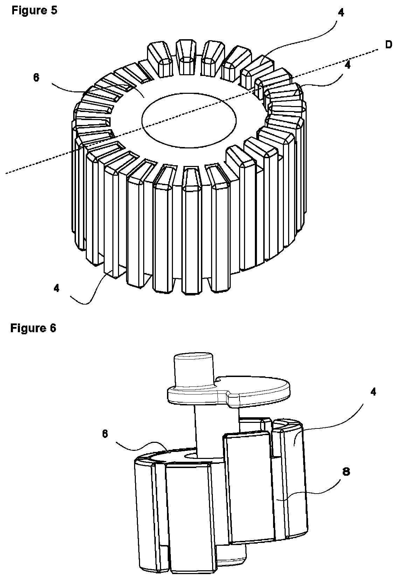

**Figure 5** - is the view of the rotor of the present invention in another embodiment featuring a plurality of magnets.
**Figure 6** - is the view of an embodiment wherein the rotor of the present invention is joined with the crankshaft in the hermetic compressor.

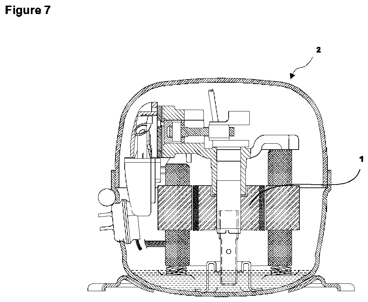

**Figure 7** - is the cross-sectional view of a hermetic compressor comprising the rotor of the present invention.

The following numerals are referred to in the description of the present invention:
1. Rotor
2. Compressor
3. Rotor package
4. Permanent magnet
5. Slot
6. Upper magnetic sheet
7. Lower magnetic sheet
8. Bend

### D. Plane of rotation

The rotor (1) comprises a rotor package (3) with a cylindrical outer form composed of magnetic sheets placed between a lower magnetic sheet (7) and an upper magnetic sheet (6); and a plurality of permanent magnets (4) placed so as to surround the outer surface of the rotor package (3).

In the rotor (1) of the present invention, some of the at least one permanent magnet (4) is placed onto the rotor package (3) so as to be at a higher level than the surface of the upper magnetic sheet (6) while some of the at least one permanent magnet (4) is placed so as to be at a lower level than the surface of the lower magnetic sheet (7), thus forming a balance weight, wherein the centrifugal forces of the permanent magnets (4) positioned higher than the upper magnetic sheet (6) are equal to those of the permanent magnets (4) positioned lower than the lower magnetic sheet (7).

In the rotor (1) of the present invention, at least one permanent magnet (4) is placed so as to be positioned at a higher level than the upper magnetic sheet (6) of the rotor package while at least one permanent magnet (4) is placed so as to be positioned at a lower level than the lower magnetic sheet (7) of the rotor package (3). Thus, a balance weight is formed on the rotor by placing the permanent magnets (4) at different levels with respect to the lower and upper magnetic sheets (6, 7) of the rotor package (3). While a balance weight is formed by means of the permanent magnets (4) having the same weight and positioned at an equal distance to the center of the rotor (1) by placing some of the permanent magnets (4) at a higher level than the upper magnetic sheet (6) and some at a lower than the lower magnetic sheet (7), the centrifugal force of the permanent magnets (4) is the same, thus preventing any vibrations on the rotor (1).

In an embodiment of the present invention, the height of each permanent magnet (4) higher than the surface of the upper magnetic sheet (6) is the same while the height of each permanent magnet (4) lower than the surface of the lower magnetic sheet (7) is the same. Thus, the permanent magnets (4) placed higher than the upper magnetic sheet (6) and the lower than the surface of the lower magnetic sheet (7) of the rotor package (3) form a balanced elevation.

In an embodiment of the present invention, the height of the permanent magnet (4) higher than the surface of the upper magnetic sheet (6) is equal to the height of the permanent magnet (4) lower than the surface of the lower magnetic sheet (7).

In an embodiment of the present invention, the permanent magnets (4) are placed so as to be positioned at a higher level than the surface of the upper magnetic sheet (6) and a lower level than the surface of the lower magnetic sheet (7) in a symmetrical manner with respect to the plane of rotation (D).

In an embodiment of the present invention, the rotor (1) comprises at least two bends (8) which extend along the rotor package (3) on the cylindrical outer surface of the rotor package (3), and a plurality of slots (5) each remaining between each two bends (8), suitable for the placement of the permanent magnets (4). The magnets (4) can be slidably placed into said slots (5) in a balanced manner.

In an embodiment of the present invention, an even number of permanent magnets (4) are placed higher than the upper magnetic sheet (6), the number being equal to the number of permanent magnets placed lower than the lower magnetic sheet (7).

The rotor (1) of the present invention is used in a hermetic compressor (2) suitable to be used in cooling devices.

By means of the present invention, by balancing the centrifugal force with the placement of the permanent magnets, a rotor (1) is realized, having the balance weight feature without requiring any additional weight.

## Claims

1. A surface permanent magnet (SPM) type rotor (1) **comprising** a rotor package (3) with a cylindrical outer form composed of magnetic sheets placed, when axis of the rotor (1) is in vertical position, between a lowermost magnetic sheet (7) and an uppermost magnetic sheet (6); and a plurality of permanent magnets (4) having a height greater than height of the rotor package (3), said plurality of permanent magnets (4) being placed so as to surround the outer surface of the rotor package (3), **characterized in that** a first subset of said plurality of permanent magnets (4) is placed onto the rotor package (3) such that, when axis of the rotor (1) is in vertical position, the upper surface of each permanent magnet (4) in the first subset is at a higher level than the surface of the uppermost magnetic sheet (6), while their lower surface is not at a lower level than the lowermost magnetic sheet (7), while a second subset of said plurality of permanent magnets (4) is placed onto the rotor package (3) such that, when axis of the rotor (1) is in vertical position, the lower surface of each permanent magnet (4) in the second subset is at a lower level than the surface of the lowermost magnetic sheet (7), while their upper surface is not at an upper level than the uppermost magnetic sheet (6), thus forming a balance weight, and the centrifugal forces of the first subset of permanent magnets (4) being equal to the centrifugal forces of the second subset of the permanent magnets (4).

2. A rotor (1) as in Claim 1, **characterized in that** each permanent magnet (4) of the first subset has a first predetermined height which is the height of the part of each permanent magnet (4) that is higher than the uppermost magnetic sheet (6) and each permanent magnet (4) of the second subset has a second predetermined height. which is the height of the part of each permanent magnet (4) that is lower than the lowermost magnetic sheet (7).

3. A rotor (1) as in Claim 2, **characterized in that** the first predetermined height and the second predetermined height are equal.

4. A rotor (1) as in any one of the above claims, **characterized in that** the first subset of permanent magnets (4) and the second subset of permanent magnets (4) are symmetrically arranged with respect to the plane of rotation (D).

5. A rotor (1) as in any one of the above claims, **characterized in that** the rotor (1) further comprises at least two bends (8) which extend along the rotor package (3) on the cylindrical outer surface of the rotor package (3), and a plurality of slots (5) each remaining between each two bends (8), suitable for the placement of the permanent magnets (4).

6. A rotor (1) as in any one of the above claims, **characterized in that** a predetermined even number of permanent magnets (4) are comprised in each one of the first subset and the second subset.

7. A hermetic compressor (2) comprising the rotor (1) as in any one of the above claims, which is suitable to be used in cooling devices.

## Patentansprüche

1. Ein Rotor (1) vom Typ mit Oberflächenpermanentmagnet (SPM), **umfasst** einen Rotorpaket (3) mit zylindrischer Außenform, das aus Magnetblechen besteht, die bei senkrechter Achse des Rotors (1) zwischen einem untersten Magnetblech (7) und einem obersten Magnetblech (6) angeordnet sind; und mehrere Permanentmagnete (4) mit einer Höhe, die größer ist als die Höhe des Rotorpakets (3), wobei die mehreren Permanentmagnete (4) so angeordnet sind, dass sie die Außenfläche des Rotorpakets (3) umgeben; **gekennzeichnet ist es dadurch,** dass eine erste Teilmenge der Vielzahl von Permanentmagneten (4) derart auf dem Rotorpaket (3) platziert wird, dass, wenn die Achse des Rotors (1) in vertikaler Position ist, die obere Oberfläche jedes Permanentmagneten (4) in der ersten Teilmenge auf einem höheren Niveau ist als die Oberfläche des obersten Magnetblechs (6), während sich ihre untere Oberfläche nicht auf einem niedrigeren Niveau als die unterste Magnetfolie (7) befindet, während eine zweite Teilmenge der Vielzahl von Permanentmagneten (4) derart auf dem Rotorpaket (3) angeordnet ist, so dass, wenn die Achse des Rotors (1) in vertikaler Position ist, wobei sich die untere Oberfläche jedes Permanentmagneten (4) in der zweiten Teilmenge sich auf einem niedrigeren Niveau als die Oberfläche der untersten Magnetfolie (7) befindet, während ihre obere Fläche nicht auf einem höheren Niveau als die oberste Magnetfolie (6) liegt und somit ein Ausgleichsgewicht bildet, und die Zentrifugalkräfte der ersten Untergruppe von Permanentmagneten (4) gleich den Zentrifugalkräften der zweiten Untergruppe von Permanentmagnete (4) sind.

2. Ein Rotor (1), wie in Anspruch 1 aufgeführt, **ist dadurch gekennzeichnet, dass** jeder Permanentmagnet (4) der ersten Teilmenge eine erste vorgegebene Höhe hat, die die Höhe des Teils jedes Permanentmagneten (4) ist, der höher als die oberste Magnetfolie (6) ist und jeder Permanentmagnet (4) der zweiten Teilmenge eine zweite vorbestimmte Höhe hat, die die Höhe des Teils jedes Permanentmagneten (4) ist, der niedriger ist als die unterste Magnetfolie (7).

3. Ein Rotor (1), wie in Anspruch 2 aufgeführt, **ist dadurch gekennzeichnet, dass** die erste vorbestimmte Höhe und die zweite vorbestimmte Höhe gleich sind.

4. Ein Rotor (1), wie in einem der vorherigen Ansprüchen aufgeführt, **ist dadurch gekennzeichnet, dass** die erste Teilmenge von Permanentmagneten (4) und die zweite Teilmenge von Permanentmagneten (4) symmetrisch in Bezug auf die Rotationsebene (D) angeordnet sind.

5. Ein Rotor (1), wie in einem der vorherigen Ansprüchen aufgeführt, **ist dadurch gekennzeichnet, dass** der Rotor (1) ferner mindestens zwei Biegungen (8) umfasst, die sich entlang des Rotorpakets (3) auf der zylindrischen Außenfläche des Rotorpakets (3) erstrecken und mehrere Schlitze (5), von denen jeder zwischen jeweils zwei Biegungen (8) verbleibt, die für die Anordnung der Permanentmagnete (4) geeignet sind.

6. Ein Rotor (1), wie in einem der vorherigen Ansprüchen aufgeführt, **ist dadurch gekennzeichnet, dass** eine vorbestimmte gerade Anzahl von Permanentmagneten (4) in jedem der ersten Teilmenge und der zweiten Teilmenge enthalten ist.

7. Ein hermetischer Kompressor (2) umfasst einen Rotor (1) nach einem der obigen Ansprüche, der zur Verwendung in Kühlvorrichtungen geeignet ist.

## Revendications

1. Rotor (1) de type à aimant permanent de surface (SPM) **comprenant** un ensemble rotor (3) de forme extérieure cylindrique composé de tôles magnétiques placées, lorsque l'axe du rotor (1) est en position verticale, entre une tôle magnétique inférieure (7) et une tôle magnétique supérieure (6) ; et une pluralité d'aimants permanents (4) ayant une hauteur supérieure à la hauteur du rotor (3), ladite pluralité d'aimants permanents (4) étant placée de manière à entourer la surface extérieure du rotor (3), **caractérisée en ce qu'**un premier sous-ensemble de ladite pluralité d'aimants permanents (4) est placé sur le rotor (3) de manière à ce que, lorsque l'axe du rotor (1) est en position verticale, la surface supérieure de chaque aimant permanent (4) du premier sous-ensemble se trouve à un niveau supérieur à la surface de la tôle magnétique la plus haute (6), tandis que leur surface inférieure ne se trouve pas à un niveau inférieur à la tôle magnétique la plus basse (7), tandis qu'un deuxième sous-ensemble de cette pluralité d'aimants permanents (4) est placé sur l'ensemble du rotor (3) de telle sorte que, lorsque l'axe du rotor (1) est en position verticale, la surface inférieure de chaque aimant permanent (4) du deuxième sous-ensemble se trouve à un niveau inférieur à la surface de la feuille magnétique la plus basse (7), tandis que leur surface supérieure n'est pas à un niveau inférieur à la surface de la feuille magnétique la plus basse (7), tandis que leur surface supérieure ne se trouve pas à un niveau supérieur à celui de la feuille magnétique la plus haute (6), formant ainsi un poids d'équilibre, et les forces centrifuges du premier sous-ensemble d'aimants permanents (4) étant égales aux forces centrifuges du second sous-ensemble d'aimants permanents (4).

2. Rotor (1) selon la déclaration 1, **caractérisé en ce que** chaque aimant permanent (4) du premier sous-ensemble a une première hauteur prédéterminée qui est la hauteur de la partie de chaque aimant permanent (4) qui est plus haute que la tôle magnétique la plus haute (6) et chaque aimant permanent (4) du deuxième sous-ensemble a une deuxième hauteur prédéterminée qui est la hauteur de la partie de chaque aimant permanent (4) qui est plus basse que la tôle magnétique la plus basse (7).

3. Rotor (1) selon la déclaration 2, **caractérisé en ce que** la première hauteur prédéterminée et la seconde hauteur prédéterminée sont égales.

4. Rotor (1) selon l'une quelconque des déclarations précédentes, **caractérisé en ce que** le premier sous-ensemble d'aimants permanents (4) et le second sous-ensemble d'aimants permanents (4) sont disposés symétriquement par rapport au plan de rotation (D).

5. Rotor (1) selon l'une quelconque des déclarations ci-dessus, **caractérisé en ce que** le rotor (1) comprend en outre au moins deux coudes (8) qui s'étendent le long du corps de rotor (3) sur la surface extérieure cylindrique du corps de rotor (3), et une pluralité de fentes (5) subsistant chacune entre deux coudes (8), adaptées au placement des aimants permanents (4).

6. Rotor (1) selon l'une quelconque des déclarations précédentes, **caractérisé en ce qu'un** nombre pair prédéterminé d'aimants permanents (4) est compris dans chacun du premier sous-ensemble et du second sous-ensemble.

7. Un compresseur hermétique (2) comprenant le rotor (1) selon l'une quelconque des déclarations précédentes, qui est apte à être utilisé dans des dispositifs de refroidissement.
